Europäisches Patentamt

European Patent Office

Office européen des brevets

(19)

(11) Numéro de publication: **0 335 797**
**A1**

## (12) DEMANDE DE BREVET EUROPEEN

(21) Numéro de dépôt: 89400874.7

(22) Date de dépôt: 29.03.89

(51) Int. Cl.⁴: **G 04 G 7/00**
H 04 L 7/06, H 04 L 25/38

(30) Priorité: 31.03.88 FR 8804321

(43) Date de publication de la demande:
04.10.89 Bulletin 89/40

(84) Etats contractants désignés: DE GB IT

(71) Demandeur: **AUTOMOBILES PEUGEOT**
**75, avenue de la Grande Armée**
**F-75116 Paris (FR)**

(84) Etats contractants désignés: DE GB IT

(71) Demandeur: **AUTOMOBILES CITROEN**
**62 Boulevard Victor-Hugo**
**F-92200 Neuilly-sur-Seine (FR)**

(84) Etats contractants désignés: DE

(72) Inventeur: **Herbault Patrick**
**40 Bd Exelmans**
**75016 Paris (FR)**

(74) Mandataire: **Polus, Camille et al**
**c/o Cabinet Lavoix 2, Place d'Estienne d'Orves**
**F-75441 Paris Cedex 09 (FR)**

(54) Procédé et dispositif de synchronisation en réception d'une horloge locale d'une station d'un réseau de communication, notamment d'un véhicule automobile.

(57) Ce procédé est caractérisé en ce qu'on réalise une division temporelle d'un délimiteur de début d'un message (12) reçu par la station, de durée m, par un nombre n déterminé, de manière à obtenir un quotient q et un reste r de division, et ensuite on supprime du signal d'horloge locale (13) de la station, par période de temps m, un nombre de créneaux correspondant au reste r de la division, et on divise le nombre de créneaux du signal résultant de cette opération par le quotient q, pour obtenir un signal d'horloge locale synchronisée (18).

FIG.5

EP 0 335 797 A1

Bundesdruckerei Berlin

## Description

### Procédé et dispositif de synchronisation en réception d'une horloge locale d'une station d'un réseau de communication, notamment d'un véhicule automobile

La présente invention concerne un procédé de synchronisation en réception d'une horloge locale d'une station d'un réseau de communication, notamment d'un véhicule automobile et un dispositif pour la mise en oeuvre de ce procédé.

Lorsque dans un réseau de communication différentes stations sont interconnectées, elles réalisent localement des opérations de communication à partir de leur propre horloge locale.

Ces horloges locales fournissent des références de temps pour interpréter en réception et engendrer en émission, des trames de communication.

En émission, une station engendre des données au rythme de son horloge locale sous forme d'un signal encodé.

Afin de faciliter l'interprétation de la trame, l'encodage du signal peut contenir à chaque bit l'information d'horloge, ceci étant réalisé par codage en largeur d'impulsions, codage biphasé, ou tout autre variante.

D'autres procédés de transmission ne fournissent pas de référence de temps à chaque bit. Ainsi par exemple, le codage NRZ (Non Retour à Zéro) reproduit directement les données. Seules les transitions des données permettent de repérer les transitions de l'horloge locale de la station émittrice.

Si le signal comporte une série de bits identiques, on ne peut plus identifier le signal d'horloge. On peut alors adjoindre à ce signal, un bit de début (start) et deux bits de fin (stop) systématiques et avoir en réception une horloge assez précise pour entretenir le synchronisme de la station pendant la durée de transmission.

Un autre procédé de transmission consiste à insérer un bit de bourrage dans le signal, si un nombre défini de bits successifs sont égaux, de façon à créer une transition permettant de recaler les horloges des stations. Ce bit de bourrage doit être retiré de la trame au cours du décodage en réception.

Tous ces procédés ne permettent donc de recevoir et d'émettre des messages qui si la précision de l'horloge locale de la station concernée est suffisamment élevée pour assurer des références de temps correctes entre les recalages d'horloge successifs, en fonction du procédé de codage choisi.

On conçoit alors que ces procédés présentent un certain nombre d'inconvénients, dans la mesure où on est obligé de mettre en oeuvre des horloges identiques et relativement précises dans chaque station.

Le but de l'invention est de résoudre ces problèmes en proposant un procédé et un dispositif de synchronisation qui permettent d'obtenir des références de temps correctes avec des horloges locales moins précises, voire différentes.

A cet effet, l'invention a pour objet un procédé de synchronisation en réception d'une horloge locale d'une station d'un réseau de communication, notamment d'un véhicule automobile, caractérisé en ce qu'on réalise une division temporelle d'un délimiteur de début d'un message reçu par la station, de durée m, par un nombre n déterminé, de manière à obtenir un quotient q et un reste r de division, et ensuite on supprime du signal d'horloge locale de la station, par période de temps m, un nombre de créneaux correspondant au reste r de la division, et on divise le nombre de créneaux du signal résultant de cette opération par le quotient q, pour obtenir un signal d'horloge locale synchronisée.

Selon un autre aspect, l'invention a également pour objet un dispositif pour la mise en oeuvre du procédé tel que décrit précédemment.

Il est donc possible dans certains cas, de remplacer un oscillateur à quartz dans la station, par un résonateur céramique, ou un oscillateur résistance-capacité compensé par le procédé selon l'invention.

Ce procédé repose sur l'hypothèse que bien qu'une horloge soit peu précise, elle reste stable pendant la durée d'une trame et que cette trame contient un délimiteur de début de message que l'on peut utiliser comme référence commune de temps.

L'invention sera mieux comprise à l'aide de la description qui va suivre, donnée uniquement à titre d'exemple et faite en se référant aux dessins annexés, sur lesquels :

- les Fig. 1 et 2 représentent deux exemples de procédés de transmission de l'état de la technique;
- la Fig. 3 représente une trame codée en modulation de largeur d'impulsions, précédée d'un délimiteur de début de message;
- la Fig. 4 représente un dispositif de l'état de la technique permettant de diviser le délimiteur de début de message;
- les Fig. 5 et 6 représentent deux modes de réalisation de dispositifs de synchronisation selon l'invention; et
- la Fig. 7 illustre un exemple d'application de signaux obtenus par l'intermédiaire d'un procédé et d'un dispositif selon l'invention.

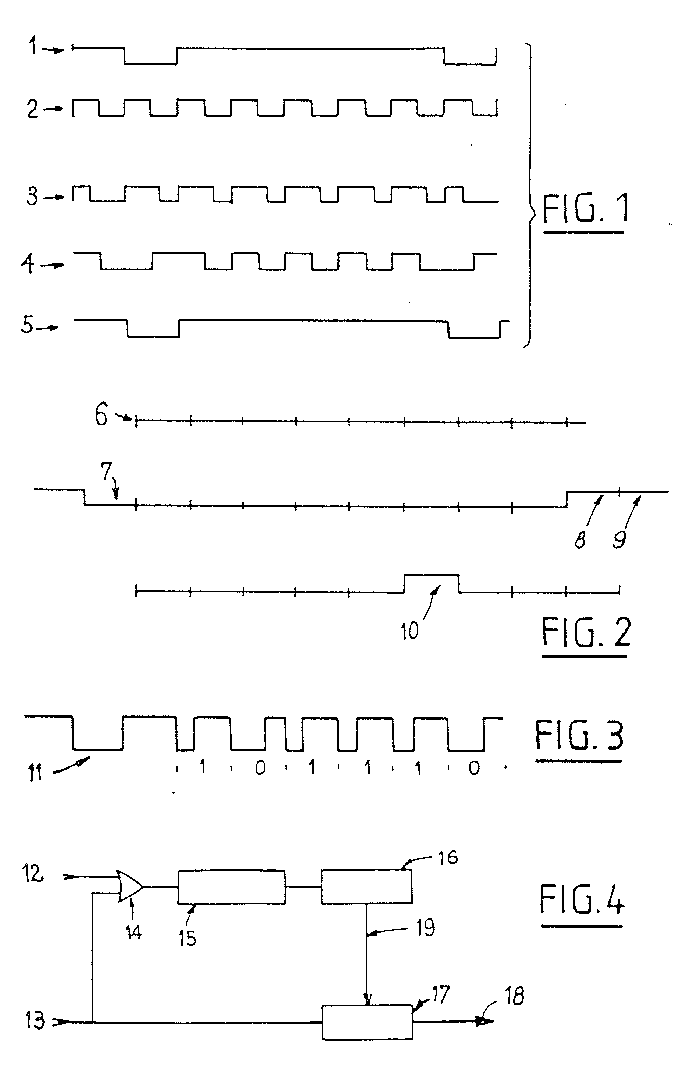

Comme cela est représenté sur la Fig. 1, les horloges locales de stations fournissent des références de temps pour interpréter en réception et engendrer en émission, des trames de communication.

Ainsi, en émission, une station engendre des données 1 au rythme de son horloge interne 2 sous forme d'un signal encodé. Pour faciliter l'interprétation de la trame, l'encodage du signal peut contenir à chaque bit l'information d'horloge en utilisant par exemple le codage en largeur d'impulsions comme c'est le cas pour le signal 3 représenté sur cette figure ou le codage biphasé comme c'est le cas pour le signal 4. D'autres procédés de transmission ne fournissent pas de référence de temps à chaque bit, comme le codage NRZ mentionné précédemment, et illustré par le signal 5 sur la Fig. 1, qui reproduit directement les données. Seules les transitions des données permettent de repérer les transitions de l'horloge de la station émettrice.

Si comme représenté sur la Fig. 2, le signal 6 comporte une série de bits identiques, on ne peut plus identifier le signal d'horloge. Il est alors possible d'adjoindre à ce signal un bit de début (start) 7 et deux bits de fin (stop) 8 et 9 et avoir en réception une horloge assez précise pour entretenir le synchronisme pendant la durée de la transmission.

Un autre procédé représenté sur la Fig. 2, consiste à insérer dans le signal, un bit de bourrage 10 si un nombre défini de bits successifs sont égaux de façon à créer la transition permettant de recaler les horloges.

La Fig. 3 donne un exemple d'une trame codée en modulation de largeur d'impulsions, précédée d'un délimiteur de début de trame 11. Ce délimiteur est réalisé par un niveau 0 logique durant une première durée de bit, suivi d'un niveau 1 logique durant une deuxième durée de bit.

Si l'on veut utiliser la référence de temps de ce créneau, pour fournir à la station locale, l'horloge de référence, il fau la diviser en éléments de temps plus fins qui permettront l'encodage et le décodage des bits.

Ainsi par exemple, si l'on souhaite obtenir n divisions de temps de cette référence, on peut réaliser cette opération par un ensemble de compteurs et de diviseurs programmables représenté sur la Fig. 4.

Sur cette figure, un signal d'horloge de station 13 et un signal d'entrée 12 sont reliés aux entrées d'une porte ET 14 dont la sortie est reliée à l'entrée d'un diviseur programmable par n, 15, dont la sortie est reliée à un compteur 16, n étant un nombre entier déterminé, et le signal d'entrée 12 étant le créneau de référence de temps du délimiteur de début de message obtenu à partir du signal reçu, par un circuit logique non représenté.

La sortie de ce compteur 16 est reliée à un compteur-diviseur programmable 17 dont l'entrée reçoit également le signal d'horloge 13 et dont la sortie est référencée en 18.

On mesure donc la durée m du créneau de référence en utilisant le signal d'horloge 13 qui est inhibé ou autorisé par le signal d'entrée 12 par l'intermédiaire de la porte 14, pour incrémenter n fois le diviseur programmable 15. Ce diviseur programmable 15 assure la division temporelle par n de la référence pour incrémenter le compteur 16 jusqu'à la valeur q 19, q étant le quotient de la division de la référence par n.

Cette valeur mémorisée dans le compteur 16 permet de programmer le compteur-diviseur programmable 17, et le signal d'horloge ainsi divisé par q à la sortie 18 de ce compteur-diviseur permet d'obtenir environ n tops par durée de référence, mais d'une façon approximative.

En effet, si la durée de référence est de par exemple $m = 46$ tops, qu'on souhaite diviser en $n = 16$ subdivisions, on obtient $q = 2$ avec un reste r de 14 tops dont on ne tient pas compte. On génère alors par durée m, 23 tops de référence au lieu des 16 initialement souhaités.

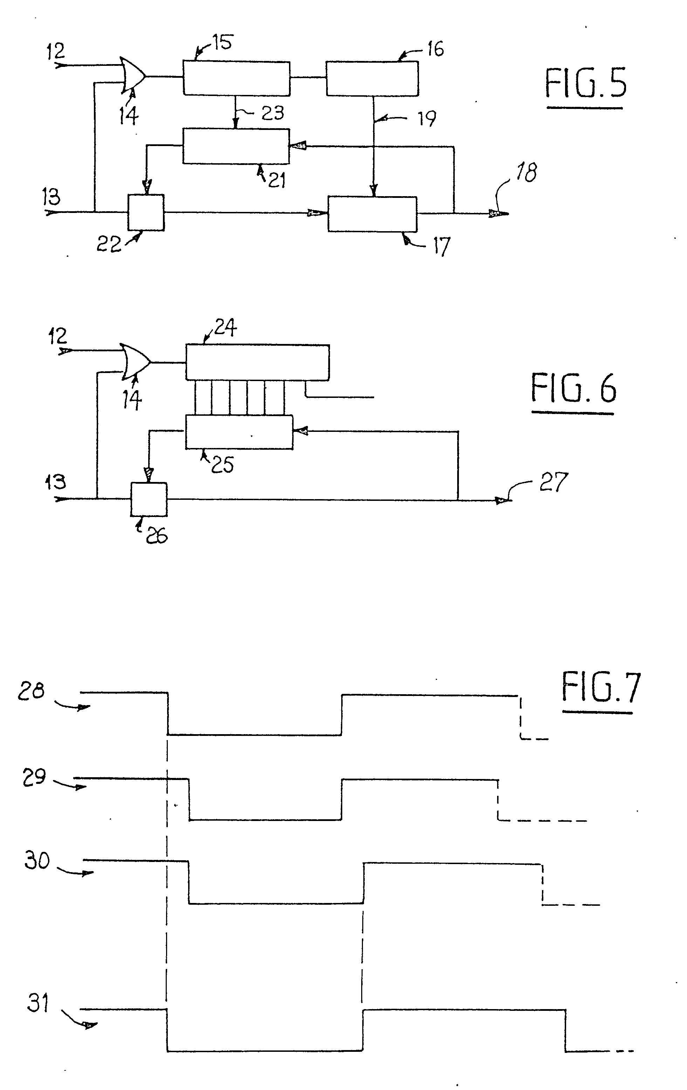

Pour pallier cette imprécision liée à la non prise en compte du reste r, on peut soit augmenter la fréquence d'horloge jusqu'à la multiplier par n, soit pour éviter les difficultés liées à cette augmentation de la fréquence, tenir compte du reste par le dispositif représenté sur la Fig. 5.

Ce dispositif, outre les différents composants décrits précédemment en regard de la Fig. 4, comme la porte ET 14, recevant sur ses entrées les signaux d'horloge 13 et d'entrée 12, le diviseur programmable 15, le compteur 16 et le compteur-diviseur programmable 17, comporte également un multiplicateur binaire 21 (BRM, Binary Rate Multiplier) constitué par exemple par un composant du type SN 5497 commercialisé par la société Texas Instruments, recevant du diviseur programmable 15, le reste r, 23, de la division de la référence par n.

Ce multiplicateur 21 est incrémenté par la sortie 18 du dispositif qui est reliée à son entrée de comptage et la sortie du multiplicateur est reliée à un circuit logique 22 réalisé à partir de bascules et connecté à l'entrée du compteur-diviseur programmable 17. Ce circuit logique 22 permet de supprimer des tops ou créneaux issus du signal d'horloge 13. Ainsi, le multiplicateur binaire 21 programmé par le reste r, 23, de la division par n de la référence, intercepte par l'intermédiaire du circuit logique 22, en temps réel pendant le traitement, r créneaux correspondant au reste de la division, à l'entrée du compteur-diviseur programmable 17 et donc les supprime du signal d'horloge locale, par période de temps m, avant la division du nombre de créneaux restant de ce signal dans ce compteur-diviseur par le quotient q de la division. Le signal présent à la sortie 18 et résultant de cette division fournit pour la suite du message, en moyenne n tops de référence par durée $nq + r = m$.

Un tel multiplicateur binaire a déjà été utilisé dans des dispositifs pour comparer les durées de deux créneaux, comme décrit par exemple dans le document FR-A-2 577 049 au nom de la Demanderesse, et on ne décrira pas son fonctionnement plus en détail.

Dans le cas où la tolérance des horloges est beaucoup plus restreinte, et donc compte tenu du fait que le quotient q de la division est égal à 1, il est également possible de se contenter d'une version simplifiée du dispositif, comme celle représentée sur la Fig. 6, dans laquelle le compteur-diviseur programmable 17 n'a pas été représenté dans la mesure où c'est un compteur-diviseur par 1, les signaux d'entrée 12 et d'horloge 13 sont toujours raccordés aux entrées d'une porte ET 14 dont la sortie est reliée à un compteur 24 dont les sorties sont reliées aux entrées de commande d'un multiplicateur binaire 25. Ce multiplicateur binaire est relié à un circuit logique 26 dont l'entrée reçoit le signal d'horloge 13 et dont la sortie 27 est également reliée à l'entrée de comptage du multiplicateur binaire 25. En limitant les tolérances d'horloge dans un rapport de 1 à 2, on utilise alors uniquement les bits de poids faible du comptage par le compteur unique 24 comme entrée du multiplicateur 25.

Par exemple, à partir d'une horloge nominale de 4,6 MHz comprise entre 3, 2 et 6,4 MHz, on obtient une durée de référence m de 46 tops, le reste r = 14 programmant le multiplicateur 25 qui supprime r = 14 tops ou créneaux par période de n + r soit 32 + 14 = 46 = m.

Le multiplicateur 25 réalise la distribution des 32 tops au cours des 46 tops de la durée de référence. La distribution est plus régulière si n est une puissance de 2, mais l'utilisation de valeurs autres telles que par exemple n = 3, n = 10 est également possible.

L'utilisation de la référence de temps donnée par le délimiteur de début de message n'est pas limitée à la réception et au décodage des trames. En effet, certaines techniques d'accès au réseau utilisent des procédés dits de collision dans lesquels les stations émettrices peuvent émettre simultanément tout en observant la ligne, comme dans les procédés en accès multiples avec écoute de porteuse CSMA (Carrier Sense Multi Access).

Dans ce cas, l'ensemble des stations émettrices engendrent des délimiteurs de début de message qui peuvent être légèrement décalés dans le temps et de durées différentes. Si le réseau admet une logique dominante, les délimiteurs de début de trame. comme les délimiteurs 28, 29 et 30 représentés sur la Fig. 7, forment un délimiteur commun de début de trame 31 qui sert de référence de temps commune. Les références de temps locales ainsi synchronisées, permettent par exemple de réaliser un procédé de collision bit à bit.

Une autre conséquence de ceci est que le réseau s'adapte automatiquement aux décalages d'émission ainsi qu'aux vitesses de transmission les plus lentes.

On conçoit donc que le procédé proposé permet de corriger différents types d'imprécision liés aux horloges locales utilisées, aux problèmes de transmission ou encore aux procédés d'accès aux réseaux de transmission.

Le procédé et le dispositif qui viennent d'être décrits trouvent des applications notamment dans les réseaux de communication de véhicules automobiles.

## Revendications

1. Procédé de synchronisation en réception d'une horloge locale d'une station d'un réseau de communication, notamment d'un véhicule automobile, caractérisé en ce qu'on réalise une division temporelle d'un délimiteur de début d'un message reçu par la station, par un nombre n déterminé, de manière à obtenir un quotient q et un reste r de division, et ensuite on supprime du signal d'horloge locale de la station, par période de temps m, un nombre de créneaux correspondant au reste r de la division, et on divise le nombre de créneaux du signal résultant de cette opération par le quotient q, pour obtenir un signal d'horloge locale synchronisée.

2. Procédé selon la revendication 1, caractérisé en ce qu'on réalise la division temporelle du délimiteur de début de message de durée m, par un nombre n déterminé de manière à obtenir un quotient q égal à 1 et un reste r de division égal à m-n et ensuite on supprime du signal d'horloge locale de la station par période de temps m, un nombre de créneaux correspondant au reste r de la division pour obtenir le signal d'horloge locale synchronisée.

3. Procédé selon la revendication 1 ou 2, caractérisé en ce que, dans un dispositif de transmission à accès multiples au réseau par plusieurs stations, en émission, l'horloge locale de chaque station se synchronise en réception sur un délimiteur commun (31) formé par les délimiteurs de début de message (28, 29, 30) de chaque station.

4. Dispositif pour la mise en oeuvre du procédé selon la revendication 1 ou 3, caractérisé en ce qu'il comporte des moyens (15) de division temporelle du délimiteur de début de message reçu par la station, par un nombre n déterminé, de manière à obtenir un quotient q (19) et un reste r (23) de division, des moyens (21, 22) de soustraction du signal d'horloge locale (13) de la station, d'un nombre de créneaux correspondant au reste r (23) de la division et des moyens (17) de division du nombre de créneaux du signal résultant de cette opération par le quotient q (19), pour obtenir un signal d'horloge locale synchronisée.

5. Dispositif pour la mise en oeuvre du procédé selon la revendication 2 ou 3, caractérisé en ce qu'il comporte des moyens (24) de division temporelle du délimiteur de début de message reçu par la station, de durée m, par un nombre n déterminé de manière à obtenir un quotient q égal à 1 et un reste r de division égal à m-n et des moyens (25,26) de suppression du signal d'horloge locale (13) par période de temps m, d'un nombre de créneaux correspondant au reste r de la division pour obtenir un signal d'horloge locale synchronisé.

6. Dispositif selon la revendication 4 ou 5, caractérisé en ce que les moyens de soustraction du reste r, comprennent un multiplicateur binaire (21; 25).

FIG. 1

FIG. 2

FIG. 3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 567 308  (COMMUNICATIONS PATENTS LTD)<br>* Page 1, ligne 63 - page 2, ligne 57; figure *<br>--- | 1-6 | G 04 G    7/00<br>H 04 L    7/06<br>H 04 L   25/38 |
| Y | EP-A-0 192 530  (AUTOMOBILES PEUGEOT-CITROEN)<br>* En entier *<br>--- | 1-6 | |
| A | FR-A-2 197 265  (DYNACORE S.A.)<br>* Figures *<br>--- | 1 | |
| A | US-A-3 914 706  (W. HAMMER)<br>* Figures *<br>----- | 1 | |

|  |
|---|
| DOMAINES TECHNIQUES RECHERCHES (Int. Cl.4) |
| G 04 G<br>H 04 L |

**Le présent rapport a été établi pour toutes les revendications**

| Lieu de la recherche | Date d'achèvement de la recherche | Examinateur |
|---|---|---|
| LA HAYE | 30-06-1989 | EXELMANS U.G.J.R. |